# EUROPEAN PATENT APPLICATION

(11) **EP 3 361 712 A1**
(43) Date of publication of application: **15.08.2018**
(21) Application number: 16853116.8
(22) Date of filing: 09.10.2016
(51) Int. Cl.: H04M 1/725

(54) **VOICE ASSISTANT EXTENSION DEVICE AND WORKING METHOD THEREFOR**

(30) Priority: 09.10.2015 CN 201510649267
(71) Applicant: Yutou Technology (Hangzhou) Co., Ltd., Hangzhou, Zhejiang 310000 (CN)
(72) Inventor: XIANG, Wenjie, Hangzhou Zhejiang 310000 (CN); XU, Jian, Hangzhou Zhejiang 310000 (CN)
(74) Representative: Kristensen, Martin Hjelm
(86) International application number: PCT/CN2016/101559
(87) International publication number: WO 2017/059812

(57) **Abstract**

The invention relates to the technical field of electronic communication, and more particularly, to an electronic device. A voice assistant extension device, comprising: a sound capturing module for capturing sound information; a processing module, connected to the sound capturing module, for processing the sound information so as to acquire instruction information; and a data communication module, connected to the processing module, for realizing data communication with a mobile terminal in a wired or wireless manner, and for sending the instruction information to the mobile terminal or for receiving voice information to be played from the mobile terminal. By implementing the above technical solution of the present invention, convenience of using a voice assistant in enclosed space, such as at home, in vehicles and in offices, can be improved greatly, thereby overcoming limitations of the voice assistant, and thus improving user experience of the voice assistant.

## Description

### BACKGROUND OF THE INVENTION

### 1. Field of the Invention

The invention relates to the technical field of electronic communication, and more particularly, to an electronic device.

### 2. Description of the Related Art

A voice assistant is an application that parts of search and operation on a mobile phone can be realized or replaced through voice interaction. Through such an application, convenience of using the mobile phone in different scenarios can be improved greatly. At present, the most widely used smart phones have their own voice assistant, such as Apple's Siri, Google's google now, and Microsoft's cortana. With the help of those voice assistants, a user can give an instruction to the mobile phone by directly talking to the mobile phone instead of touching a screen of the mobile phone. The mobile phone can understand what the user is saying through the voice recognition technology, and performs the instruction given by the user. People find it more convenient when their hands are occupied.

The existing voice assistant uses a microphone of a mobile terminal, so sound pickup can only be performed in a very short distance, that is, the voice assistant functions can only be effective if the user speaks near the mobile terminal, thereby, scenario for use of the voice assistant is greatly restricted, and it has difficulty in identifying voice when a distance between the user and the mobile terminal is over 1 meter.

### SUMMARY OF THE INVENTION

In order to solve the above technical problems, the present invention provides a voice assistant extension device for a mobile phone, which overcomes a disadvantage that the existing voice assistant performs sound pickup in a very short distance.

The detailed technical solution is as follows:
A voice assistant extension device, comprising:
a sound capturing module for capturi ng sound information;
a processing module, connected to the sound capturing module, for processing the sound information so as to acquire instruction information; and
a data communication module, connected to the processing module, for realizing data communication with a mobile terminal in a wired or wireless manner, and for sendi ng the instruction information to the mobile terminal or for receiving voice information to be played from the mobile terminal.

The said voice assistant extension device, further comprising: an amplifying module, connected to the processing module, for receiving the voice information to be played from the mobile terminal so as to improve voice effect.

The said voice assistant extension device, comprising: a charging management module, connected to the processing module, for providing chargi ng power to the mobile terminal.

The said voice assistant extension device, wherein the sound capturing module comprises a plurality of microphones arranged in a predetermined angle so as to achieve capturing of sound in 360-degree space.

The said voice assistant extension device, further comprising a sound source localization module, connected to the processing module, for achieving sound source localization and noise elimination.

The said voice assistant extension device, wherein a bluetooth module, a NFC module or an infrared module is adopted as the data communication module.

The said voice assistant extension device, wherein the mobile terminal is a Siri-based mobile terminal, a google now-based mobile terminal or a cortana-based mobile terminal.

A method for the working of a voice assistant extension device is also provided, the method comprising steps of sending a voice i nstructi on:
Step 11: capturing sound information;
Step 12: processing the sound information so as to acquire instruction information;
Step 13: sending the instruction information to a mobile terminal, and the mobile terminal performs predetermined actions according to the instructi on information.

The said method for the working of a voice assistant extension device, wherein in Step 12, further comprising: acquiring instruction information after achieving sound source localization and noise elimination of the sound information and achieving.

The said method for the working of a voice assistant extension device, further comprising: Step 14, voice played from the mobile terminal is played via an amplifying module.

The present invention has the advantageous effects as follows: by implementing the above technical solution, convenience of using a voice assistant in enclosed space, such as at home, in vehicles and in offices, can be improved greatly, thereby overcoming limitations of the voice assistant, and thus improving user experience of the voice assistant.

### BRIEF DESCRIPTION OF THE DRAWINGS

The accompanying drawings, together with the specification, illustrate exemplary embodiments of the present disclosure, and, together with the description, serve to explain the principles of the present i nventi on.
Figure 1 is a system configuration diagram of an embodiment of a voice assistant extension device according to the present invention;
Figure 2 is a system configuration diagram of another embodiment of a voice assistant extension device according to the present i nventi on;
Figure 3 is a schematic structural diagram of a voice assistant extension device according to the present invention;
Figure 4 is a flowchart of a method for the working of a voice assistant extension device according to the present invention.

### DETAILED DESCRIPTION

The present invention will now be described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" or "has" and/or "having" when used herein, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

As used herein, "around", "about" or "approximately" shall generally mean within 20 percent, preferably within 10 percent, and more preferably within 5 percent of a given value or range. Numerical quantities given herein are approximate, meaning that the term "around", "about" or "approximately" can be inferred if not expressly stated.

As used herein, the term "plurality" means a number greater than one.

Hereinafter, certain exemplary embodiments according to the present disclosure will be described with reference to the accompanying drawings.

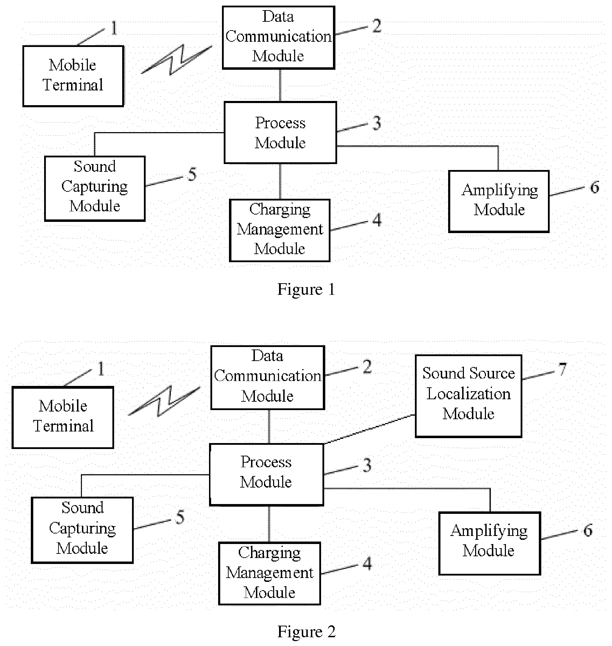

Referring to Figure 1, a voice assistant extension device, compri si ng:
a sound capturing module 5 for capturing sound information;
a processing module 3, connected to the sound capturing module 5, for processing the sound information so as to acquire instruction information; and
a data communication module 2, connected to the processing module 3, for realizing data communication with a mobile terminal in a wired or wireless manner, and for sendi ng the instruction information to the mobile terminal or for receiving voice information to be played from the mobile terminal.

The above-mentioned voice assistant extension device, comprising: a charging management module 4, connected to the processing module 3, for providing charging power to the mobile terminal. The extension device may be provided with a charging interface, through which the mobile terminal can be charged.

In a further improved embodiment, the voice assistant extension device further comprises an amplifying module 6, connected to the processing module 3, for receiving the voice information to be played from the mobile terminal so as to improve speech effect.

The amplifying module 6 can enhance volume of the sound from the mobile terminal and hear voice feedback of the voice assistant from a farther distance. In addition, the amplifying module 6 supports elimination of sound source from its own. Also, recognition of the voice instruction will not be affected when the voice assistant makes voice or plays music.

The above-mentioned sound capturing module 5 comprises a plurality of microphones arranged in a predetermined angle so as to achieve capturing of sound in 360-degree space.

The above-mentioned voice assistant extension device, referring to Figure 2, further comprising a sound source localization module 7, connected to the processing module 3, for achieving sound source localization and noise elimination.

The above-mentioned microphone array has the functions of directional pickup, sound filtering in other directions, filtering of non-human noise in the environment, and improving the accuracy of voice instruction recognition. Achieving the sound source localization and noise elimination based on the microphone array is not an improvement of the present invention, so details will not be described herein.

The above-mentioned voice assistant extension device, wherein a bluetooth module, a NFC module or an infrared module is adopted as the data communication module 2.

The above-mentioned voice assistant extension device, wherein the mobile terminal is a Siri-based mobile terminal, a google now-based mobile terminal or a cortana-based mobile terminal.

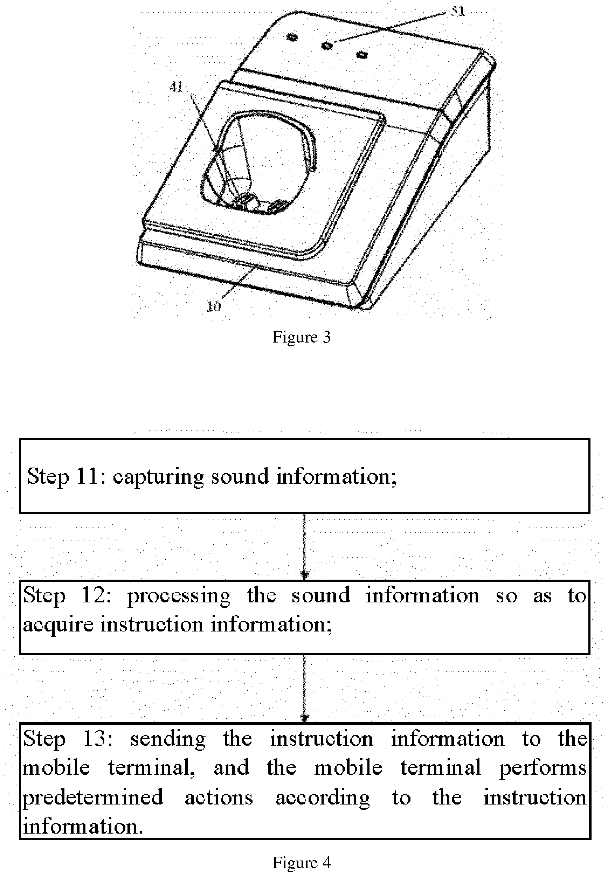

Referring to Figure 3, the extension device may be a fixed base.

The above technology provides an accessory for an intelligent mobile terminal supporting the voice assistant. With this accessory, sound at a longer distance can be picked up, and ambient noise elimination and directional pickup can be supported, allowing the user to use a function of the voice assistant within10 meters.

A method for the working of a voice assistant extension device is also provided, referring to Figure 4, the method comprising steps of sending a voice instruction:
Step 11: capturing sound information;
Step 12: processing the sound information so as to acquire instruction information;
Step 13: sending the instruction information to a mobile terminal, and the mobile terminal performs predetermined actions according to the instruction information.

The above-mentioned method for the working of a voice assistant extension device, wherein in Step 12, further comprising: acquiring instruction information after achieving sound source localization and noise elimination of the sound information.

The above-mentioned method for the working of a voice assistant extension device, further comprising: Step 14, voice played from the mobile terminal is played via an amplifying module.

The above-mentioned predetermined actions includes playing music, making a phone call, checking the weather, setting an alarm controlling home appliances and the like.

In a specific embodiment, the user makes a call via iPhone using the extension device. The user gives a voice command "hi siri, call xxx". Because of the microphone array, the voice can be accurately recognized and then transmitted to the iPhone, and the voice assistant siri on the mobile phone can get through to xxx. During the conversation, due to the presence of the microphone array and the loudspeaker, the clarity of the conversation is guaranteed at a long distance.

The mobile terminal can be placed on the expansion device for charging, and other functions provided by the voice assistant can also be used by giving voice commands, such as listening to music, making phone calls and answering the phones, setting reminders, checking the weather, setting an alarm, asking questions, sending e-mails, checking stocks and controlling home appliances. All those actions on the phone can be done without picking up the mobile phone, and the voice assistant can be used by activating the voice assistant via voice instructions anywhere in the room. And the user experience of the present invention will become better and better as the function of the voice assistant becomes more and more powerful..

By implementing the above technical solution of the present invention, convenience of using a voice assistant in enclosed space, such as at home, in vehicles and in offices, can be improved greatly, thereby overcoming limitations of the voice assistant, and thus improving user experience of the voice assistant.

The above descriptions are only the preferred embodiments of the invention, not thus limiting the embodiments and scope of the invention. Those skilled in the art should be able to realize that the schemes obtained from the content of specification and drawings of the invention are within the scope of the invention.

## Claims

1. A voice assistant extension device, comprising:
a sound capturing module for capturing sound information;
a processing module, connected to the sound capturing module, for processing the sound information so as to acquire instruction information; and
a data communication module, connected to the processing module, for realizing data communication with a mobile terminal in a wired or wireless manner, and for sending the instruction information to the mobile terminal or for receiving voice information to be played from the mobile terminal.

2. The voice assistant extension device as claimed in claim 1, further comprising: an amplifying module, connected to the processing module, for receiving the voice information to be played from the mobile terminal so as to improve voice effect.

3. The voice assistant extension device as claimed in claim 1, comprising: a charging management module, connected to the processing module, for providing charging power to the mobile terminal.

4. The voice assistant extension device as claimed in claim 1, wherein the sound capturing module comprises a plurality of microphones arranged in a predetermined angle so as to achieve capturing of sound in 360-degree space.

5. The voice assistant extension device as claimed in claim 1, further comprising a sound source localization module, connected to the processing module, for achieving sound source localization and noise elimination.

6. The voice assistant extension device as claimed in claim 1, wherein a bluetooth module, a NFC module or an infrared module is adopted as the data communication module.

7. The voice assistant extension device as claimed in claim 1, wherein the mobile terminal is a Siri-based mobile terminal, a google now-based mobile terminal or a cortana - based mobile terminal.

8. A method for the working of a voice assistant extension device, comprising steps of sending a voice instruction:
Step 11: capturi ng sound information;
Step 12: processing the sound information so as to acquire instructi on information;
Step 13: sending the instruction information to a mobile terminal, and the mobile terminal performs predetermined actions according to the instruction information.

9. The method for the working of a voice assistant extension device as claimed in claim 8, wherein in Step 12, further comprising: acquiring instruction information after achieving sound source localization and noise elimination of the sound information.

10. The method for the working of a voice assistant extension device as claimed in claim 8, further comprising: Step 14, voice played from the mobile terminal is played via an amplifying module.
